# EUROPEAN PATENT APPLICATION

(11) **EP 3 736 122 A1**
(43) Date of publication of application: **11.11.2020**
(21) Application number: 20172251.9
(22) Date of filing: 30.04.2020
(51) Int. Cl.: B32B 1/02, B32B 3/04, B32B 7/023, B32B 7/12, B32B 27/08, B32B 27/20, B32B 27/30, B32B 27/32, B32B 27/34, B32B 27/36, B29C 49/04, B29C 49/24, B29C 49/22

(54) **ONE PIECE MULTILAYER THERMOPLASTIC CONTAINER HAVING A COLORANT**

(30) Priority: 08.05.2019 US 201916406442
(71) Applicant: The Procter & Gamble Company, Cincinnati, OH 45202 (US)
(72) Inventor: NELTNER, Andrew Eric, Cincinnati, Ohio 45202 (US); LESTER, Joseph Craig, Cincinnati, Ohio 45202 (US); STOJANOVIC, Marko (NMN), Cincinnati, Ohio 45202 (US)
(74) Representative: Hoyng Rokh Monegier LLP

(57) **Abstract**

A container formed of a common one-piece multilayer thermoplastic substrate. The container wall has an outer layer and an adjacent underlying layer. And the underlying layer has a colorant visible through the outer layer. The colorant in the underlying layer can be one or more pigments and or one or more dyes.

## Description

### FIELD OF THE INVENTION

A container formed of a one-piece multilayer thermoplastic substrate with the underlying layer having colorant visible through the outer layer.

### BACKGROUND OF THE INVENTION

Blow molded containers are widely employed as a preferred package for pourable consumer products. Such containers are typically formed of a single layer of material and have a uniform visual appearance. For example the containers may be clear or translucent or be opaque and have a single color. Decoration may be provided in the form of a label. Labels such as direct object printing, pressure sensitive labels, heat transfer labels, shrink sleeve labels, and in mold labels are commonly employed.

Containers having a more sophisticated visual appearance can be provided by employing colorants in the constituent material of the container. Colorants such as dyes and pigments are commonly employed. To intensify the visual effect of the colorants in containers, a multilayer container in which the outer layer is a clear or glossy material overlying an underlying layer that includes a colorant can be practical.

Forming multilayer blow molded containers is technically challenging, especially if colorants are to be used in an underlying layer. The complexity arises from controlling extrusion of multiple layers of material to form a parison, in the case of extrusion blow molding, or injection molding multiple layers of material, in the case of injection blow molding. The machines and processes for manufacturing such blow molded containers are expensive.

With these limitations in mind, there is a continuing unaddressed need for multilayer blow molded containers in which colorants in an underlying layer can be easily provided.

### SUMMARY OF THE INVENTION

A container comprising: an open end; a closed end opposing said open end; a container wall extending longitudinally between said closed end and said open end about a longitudinal axis; an end seam extending at least partially across said closed end; and a longitudinal overlapping seam extending from said end seam, a portion of said overlapping seam extending longitudinally along said container wall from said closed end to said open end; wherein said open end is narrower than at least a portion of said container away from said open end of said container; wherein a common one-piece multilayer thermoplastic substrate forms both said closed end and said container wall; wherein said container wall comprises an outer layer and an adjacent underlying layer; wherein said underlying layer comprises colorant visible through said outer layer.

### BRIEF DESCRIPTION OF THE DRAWINGS

Figure 1 is a drawing of an apparatus for forming a web into a loose conduit.
Figure 2 is a drawing of a web having a label before and after feeding through a forming guide.
Figure 3 is a drawing of a web having a label before and after feeding through a forming guide.
Figure 4 is a drawing of the conformer in an open position.
Figure 5 is a drawing of the conformer in a closed position.
Figure 6 is a drawing of an apparatus for forming a container.
Figure 7 is a partial view of a blow mold engaged with a calibration mandrel and a blown container.
Figure 8 cutaway view of an intermediate tube in a closed blow mold.
Figure 9 is a preform having a label.
Figure 10 is a preform having a label.
Figure 11 is side view of a container after blow molding.
Figure 12 is a top view of a container showing the open end.
Figure 13 is side view of a container after blow molding.
Figure 14 is a drawing of a container, a portion of which is rendered in a section view to show the interior volume and interior surface of the container.
Figure 15 is perspective view of container in which the closed end of the container is visible.
Figure 16 is a cross section of a container.
Figure 17 is a cross section of a container including an outer layer and an adjacent underlying layer.
Figure 18 is a cross section of a container including an interior layer.

### DETAILED DESCRIPTION OF THE INVENTION

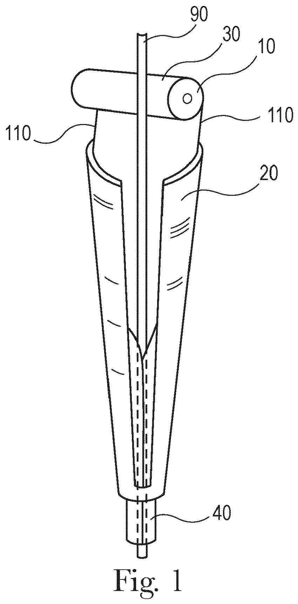

A container as contemplated herein can be formed as follows. First a web 30 can be provided wrapped around an unwinding roll 10, as shown in Fig. 1. The web 30 can be a planar web of thermoplastic sheet substrate. The web 30 can be a planar web of thermoplastic sheet substrate comprising a composition selected from the group consisting of polyethylene terephthalate, polystyrene, polypropylene, polyethylene, polyvinyl chloride, nylon, ethyl vinyl alcohol, and laminated sheets or mixtures thereof. The web 30 can be a multi-layer sheet or web of material. The web 30 can comprise a polyolefin. The web 30 can have a thickness of between about 200 µm and about 2000 µm. The web 30 can have a thickness of between about 200 µm and about 1000 µm. The web 30 can have a thickness of between about 300 µm and about 800 µm. The web 30 can comprise an ethylene vinyl alcohol (EVOH) layer having thickness between about 1 µm and about 30 µm, or even about 3 µm to about 10 µm, or even about 10 µm and about 30 µm. The web 30 can comprise an EVOH layer having thickness between about 10 µm and about 30 µm, or even about 3 µm to about 10 µm, sandwiched between two layers of poly olefin material. The web 30 can have a pair of web lateral edges 110 spaced apart from one another in the cross direction CD.

The web 30 can be a laminate of different materials. The web 30 can be a co-extrusion of different materials. The web 30 can consist of a singular polymeric material. The web 30 can have one or more barrier layers. Since it is generally thought to be less complicated to form flat webs comprised of multiple layers than it is to form multi-layered containers by the processes of extrusion blow molding, injection blow molding, injection stretch blow molding, and the like, the process disclosed herein of forming a planar web into a container and the resulting containers are thought to be particularly practical. The web 30 can be fed through a forming guide 20 to gradually form the planar web 30 into a loose conduit 40. The forming guide 20 can be a funnel or be a section of a funnel or a portion of a funnel. The forming guide 20 can be a plate of metal or plastic having a shape such that as the web 30 is unwound from the roll 10, the web 30 is gradually deformed into the shape of a loose conduit 40 in a manner such that the loose conduit is free from wrinkles, folds, or creases. The forming guide 20 can be a solid material or can be provided with one or more of apertures, slots, grooves, ridges, and the like to help the flat web 30 be transitioned from a flat web 30 into loose conduit 40. The forming guide 20 can be a series of wires set in a frame to have the shape of a funnel or a section of funnel or portion of a funnel. The forming guide 20 can be comprised of a mesh or screen material. In essence, the forming guide 20 need only to be able to assist in transitioning the flat web 30 into loose conduit 40. The web 30 moves through the forming guide 20 to be formed into loose conduit 40. The web 30 and loose conduit 40 move towards the conformer. Movement of the web 30 and loose conduit 40 can be indexed with opening and closing of the conformer so as to move when the conformer is in an open position.

The forming guide 20 can be set around a blowing cane 90 that extends through the forming guide 20 such that that loose conduit 40 is wrapped around or partially around the blowing cane 90. The blowing cane 90 provides for pressurized and or heated gas that is used in a subsequent portion of the process to form the container by blow molding.

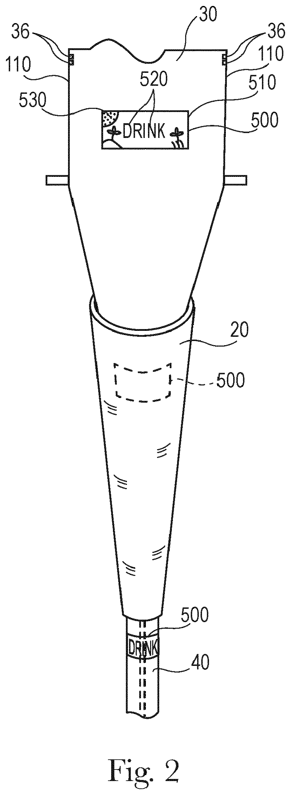

The web 30 can be provided with a label 500, as shown in Fig. 2. The label 500 can comprise a label substrate 510 and ink 520. The label can comprise foil. The label can comprise transparent portions so that the underlying container can be at least partly visible behind it. The label 500 can be adhered to the web 30 by an adhesive 530 between the label substrate 510 and the web 30. The label 500 can be thermal bonded to the web 30. The label 500 can be applied to the web 30 in a process that is continuous or intermittent with the process of transitioning the flat web 30 into the loose conduit 40. Optionally, the web 30 can be provided with the label 500 already applied thereto. That arrangement can decouple the process of applying the label 500 to the web 30 from the process of transitioning the flat web 30 into the loose conduit 40 and further converting into a finished container.

The web 30 can be provided with one or more registration marks 36 as is known in the art to aid with automated web control so that the web 30 is positioned properly during the operations performed to transform the web 30 into a container.

The label 500 can be positioned on the web 30 in any position as desired, accounting for deformation of the web 30 that occurs as the web 30 is transformed into loose conduit 40 and further converted into the finished container. The label 500 can cover less than about 50% of the surface of the web 30 that ultimately becomes the external surface finished container.

As shown in Fig. 2, the label includes text. The text is distortion printed so that when the container is blown the letters of the text have the proper height to width ratio. As shown in Fig. 2, each letter of the text is taller than it is wide. When the label 500 is stretched in the cross direction, each letter of the text will be stretched in the cross direction and the font of each letter will have the desired aspect ratio of height to width. Distortion printing is the printing of a scaled image or text on a label and then that label is controllably stretched in one or more directions so that the scaled image ends up being the desired image in terms of dimensions.

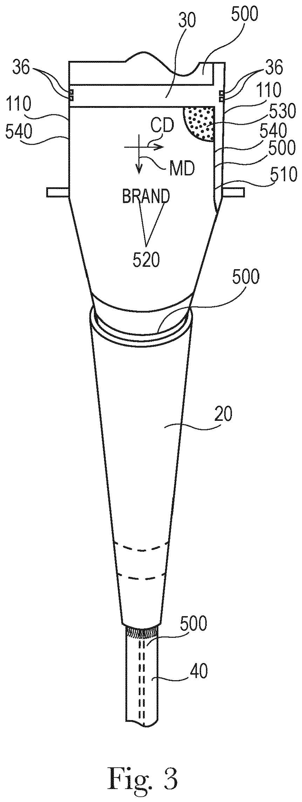

Optionally, the label 500 can be so extensive in the cross direction CD that that the label 500 extends about the entire periphery of the external surface of the finished container, by way of nonlimiting example as shown in Fig. 3. The label 500 in Fig. 3 is distortion printed, which is apparent by the letters appearing to be too skinny relative to their height. The label 500 can have a pair of label lateral edges 540 spaced apart from one another in the cross direction CD. One of the label lateral edges 540 can be coincident or substantially coincident with a web lateral edge 110. The other label lateral edge 540 can be spaced apart from the other web lateral edge 110. The label 500 can be so extensive in the machine direction MD that the label 500 extends onto the external surface of the closed end of the finished container. One or more labels 500 may be provided. And the label 500 or labels 500 may have any desired shape.

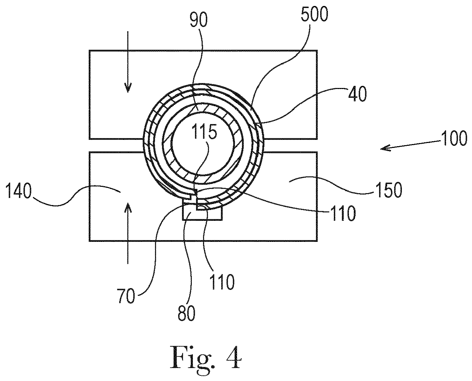

The loose conduit 40 is fed into the conformer 100, as shown in Fig. 4. Figure 4 is a top view of the conformer 100 in which the sections of the blowing cane 90 and loose conduit 40 are rendered. As shown in Fig. 4, the blowing cane 90 and loose conduit 40 fit within the conformer 100. The blowing cane 90 extends through the conformer 100 further down into the process. The loose conduit 40 is fed into the conformer 100 with the conformer 100 in an open position, as shown in Fig. 4 in which the first half 50 and second half 60 of the conformer 100 are in an open position. The conformer 100 comprises a first half 50 and a second half 60, the first half 50 and second half 60 being mounted about the blowing cane 90 and loose conduit 40. The first half 50 and second half 60 can translate towards and away from the blowing cane 90 and loose conduit 40. A hydraulic, lever, chain, or other mechanical system can be provided to translate the first half 50 and second half 60 of the conformer 100 towards and away from the blowing cane 90 and loose conduit 40. The second half 60 of the conformer 100 can be provided with an abutment 70 against which a lateral edge 110 of the loose conduit 40 can abut. As the loose conduit 40 is fed into the conformer 100, a lateral edge 110 of the loose conduit 40 can abut against the abutment 70 to true up lateral edges 110 of the loose conduit 40 with respect to one another so that the lateral edges 110 of the loose conduit 40 are parallel to one another and in an overlapping relationship with respect to one another.
If the label 500 is to extend about the entire periphery of the external surface of the finished container, the loose conduit 50 can be arranged so that the web lateral edge 110 of the web 40 that has a label lateral edge 540 coincident therewith or substantially coincident therewith is up against the abutment 70. The label 500 can extend from the web lateral edge 110 against the abutment 70 towards the opposing lateral edge 110 and leave a portion of the other web lateral edge 110 uncovered by the label 500. Arranged as such, the label 500 does not cover the web lateral edge 110 that slides past the abutment 70 when the conformer 100 is closed and a portion of the web 40 adj acent such lateral edge 110. The uncovered portion of the web 40 can be conveniently bonded to the internal surface 115 of web 40 near the web lateral edge 110 that has label 500 positioned there above, neither surface of which has the label 500 disposed thereon.

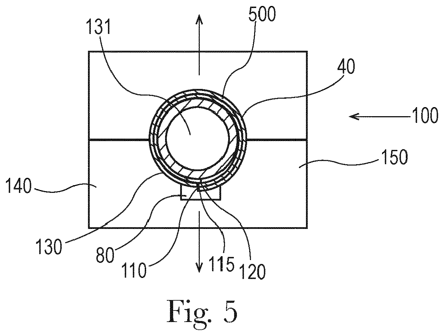

The conformer 100 can be provided with a bonding implement 80 proximal the abutment 70. The bonding implement 80 can be an ultrasonic bonding apparatus or thermal bonding apparatus. When the conformer 100 is in the closed position, the bonding implement 80 can bond an overlapping portion 120 of the loose conduit 40 to form the intermediate tube 130. The bonded overlapping portion 120 becomes the overlapping seam on the container. The intermediate tube 130 can be described as being like a hose having an overlapping seam extending along the length of the hose. The abutment 70 can extend through the conformer 100 and the abutment 70 can be parallel to the direction of movement of the loose conduit 40. Described otherwise, the abutment 70 can extend partially along or completely along the second half 60 of the conformer 100 orthogonal to the direction of translation of the first mold half 50 and or second mold half 60. The second mold half 60 of the conformer 100 can have a first quarter 140 and a second quarter 150 with the first quarter 140 and second quarter 150 offset with respect to one another at the abutment 70. The amount of the offset can be greater than or equal to the thickness of the web 30. Sized and dimensioned as such, when the conformer 100 is transitioned from the open position shown in Fig. 4 to the closed position as shown in Fig. 5, one edge of the loose conduit 40 can slide over or fit within the other edge of the loose conduit 40 so as to be in an overlapping relationship wherein the lateral edges 110 of the loose conduit are moved into an overlapping relationship such the lateral edges 110 are parallel to one another. The loose conduit 40 can have a cross section that is an approximately cylindrical shape.

The loose conduit 40 can have a cross section that is an approximately oval shape. The first mold half 50 and the second mold half 60, and the portions thereof that are the first quarter 140 and second quarter 150, can be shaped to provide the desired shape of the loose conduit 40 and ultimately the desired shape of the intermediate tube 130 that is formed when the conformer 100 is closed and the overlapping portion 120 is bonded. The intermediate tube 130 can have an intermediate tube open area 131 that is the interior cross sectional area of the intermediate tube 130 measured orthogonal to the machine direction. As shown in Fig. 5, the loose conduit 40 can have a cross section that is an approximately tubular shape. The actual shape of the loose conduit 40 is not critical so long as loose conduit can be positioned about the blowing cane 90. The loose conduit 40 can fit around the blowing cane 90 and can move along the length of the blowing cane 90 in the machine direction MD. The machine direction MD is the direction of travel of the web 30, loose conduit 40, intermediate tube 130, and container 200 in the process of making the container 200.

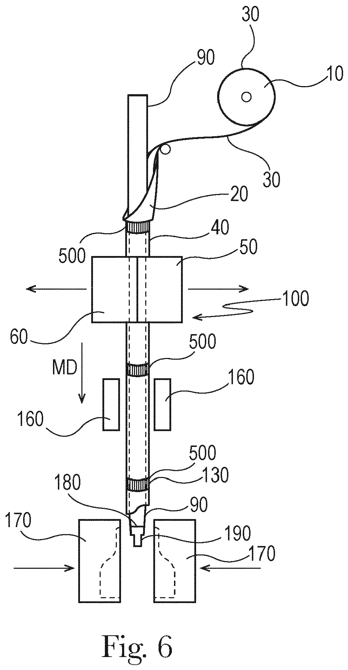

After the intermediate tube 130 is formed, the intermediate tube 130 can pass through a pre-heater 160. The pre-heater 160 can heat the intermediate tube 130 such that when the intermediate tube 130 enters the blow mold 170, the intermediate tube 130 is at a temperature such that the preform, which is formed from the intermediate tube 130, can be blow molded into a container. As shown in Fig. 6, the blowing cane 90 extends through the forming guide 20, loose conduit 40, conformer 100, and intermediate tube 130. The blowing cane 90 extends into the blow mold 170. The blowing cane 90 can provide gas, such as air to blow mold the finished container. The blow mold 170 defines a cavity into which the preform is blown to form the finished container. The cavity defined by the blow mold 170 can have the shape of the finished container. Blow molding is a thermoforming process that imparts certain physical attributes to the finished container. The blow mold 170 can be a heated blow mold 170.

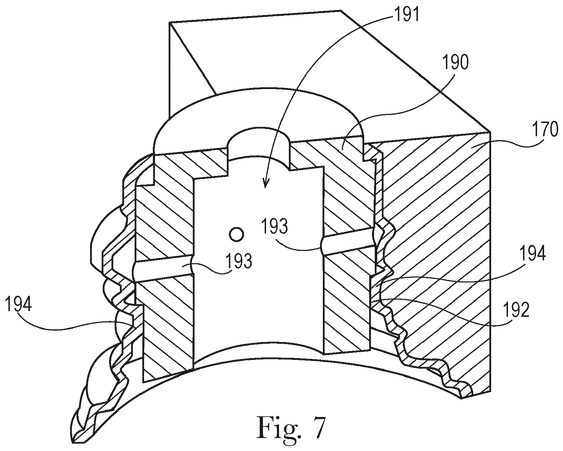

A mandrel 192 extends from the blowing cane terminus 180. The mandrel 192 can be a calibration mandrel 190 if a calibrated neck is desired for the finished container. The mandrel 192 or calibration mandrel 190 can be used to define the open end of the container. A cross section of a calibration mandrel 190 is shown in Fig. 7. The calibration mandrel 190 has an interior portion 191 and a bearing surface 192. The interior portion 191 is in fluid communication with the blowing cane 90 and comprises one or more ports 193 in fluid communication with the interior portion 191.

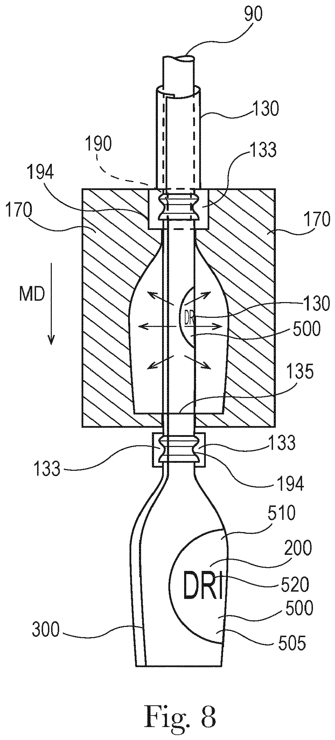

The intermediate tube 130 can be advanced over the blowing cane 90 and mandrel 192, or calibration mandrel 190 if provided, that is attached to the blowing cane 90. Once the intermediate tube 130 is in the blow molding position, the halves of the blow mold 170 close upon the intermediate tube 130. The blow mold 170 encloses a portion of the intermediate tube 130 and conforms at least a portion of the intermediate tube 130 to at least a portion of the mandrel 192, or calibration mandrel 190 if provided, as shown in Fig. 8. The intermediate tube 130 fits over the mandrel 192, or calibration mandrel 190 if provided, as the intermediate tube 130 moves in the machine direction MD. When the blow mold 170 closes about the intermediate tube 130, the blow mold 170 conforms the portion of the intermediate tube 130 that will define the open end of the container to mandrel 192, or the calibration mandrel 190 if provided.

If a calibration mandrel 190 is used, since the intermediate tube 130 loosely fits over the calibration mandrel 190, there is an excess of material that arises as the blow mold 170 closes upon the intermediate tube 130 and conforms the intermediate tube 130 to the calibration mandrel 190. The excess of material yields two flashings 133 proximal the location where the halves of the blow mold 170 meet. The amount of material in the flashing roughly corresponds with the amount of the intermediate tube 130 that can be eliminated so as to yield an open end of the container that has an open area orthogonal to the machine direction MD less than open area of the intermediate tube in that same direction. Thus, employing the calibration mandrel 190 as such allows the preform, which is formed from the intermediate tube 130, to be formed into a container having an open end that has a smaller open area orthogonal to the machine direction MD than the open area of the preform or intermediate tube 130 orthogonal to the machine direction MD. Without employing a calibration mandrel 190, the open end has the same or greater open area orthogonal to the machine direction MD as the open area of the intermediate tube 130 orthogonal to the machine direction MD. Such a container design may not be practical for containers having a narrow open end, such as a toothpaste tube.

As the halves of the blow mold 170 close upon the intermediate tube 130, the blow mold halves apply bearing pressure to the bonded overlapping portion 120 of the intermediate tube 130 against the underlying mandrel 192 or calibration mandrel 190 to form the neck 194 and compress out the overlapping portion 120 so that the overlapping portion 120 that subsequently becomes the overlapping portion of the container in the neck portion of the container is not as defined as the overlapping portion 120 of the intermediate tube 130 prior to passing through the blow mold 170 or the overlapping portion 120 that ends up forming the overlapping seam of the container. The neck 194 can be a calibrated neck.

The intermediate tube 130 is closed at a pinch seam 135 formed where the halves of the blow mold 170 close at the bottom of the blow mold 170, with that portion of the intermediate tube 130 ultimately becoming the closed end of the container 200.

As shown in Fig. 8, the text on the label 500 in the blown container 200 has an appropriate height to width ratio of the characters, as opposed to the label 500 in the blow mold 170 prior to blowing, which has characters that are too skinny relative to their height.

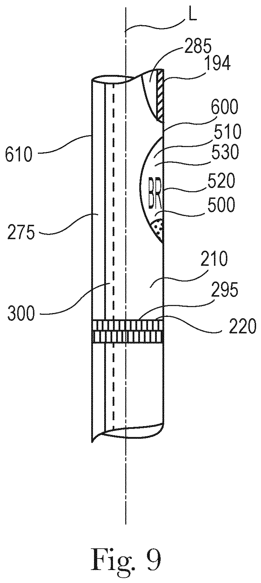

Once the pinch seam 135 is formed, the preform 600 for making the container is established (Fig. 9). The preform 600 has a closed end 220. A preform wall 610 extends longitudinally from the closed end 220 about a longitudinal axis L. The preform wall 610 has an external surface 275 that is outwardly oriented and an opposing internal surface 285. The preform 600 has an end seam 295 (pinch seam 135) extending across the closed end 220. The preform 600 has a longitudinal overlapping seam 300 extending along the preform wall 610 from the end seam 295. The preform 600 can further comprise a label 500 bonded to the external surface 275. The label 500 can be bonded to the external surface 275 by an adhesive 530, thermal bonded to the external surface 275, or otherwise bonded to the external surface 275. The label 500 can comprise a label substrate 510 and ink 520 disposed on the label substrate 510. A common one-piece multilayer thermoplastic substrate 210 forms both the closed end 220 and the preform wall 610. The preform 600 can be considered to have a neck 194 opposing the closed end 220. The neck 194 of the preform may have the same cross section shape as the preform 600 below the neck 194. The neck 194 of the preform is the part of the preform that ultimately becomes the neck 194 of the container 200. The preform wall 610 can extend longitudinally between the closed end 220 and the neck 194. Further, the longitudinal overlapping seam 300 can extend along the preform wall 610 from the end seam 295 to the neck 194, the neck being proximal the open end 230.

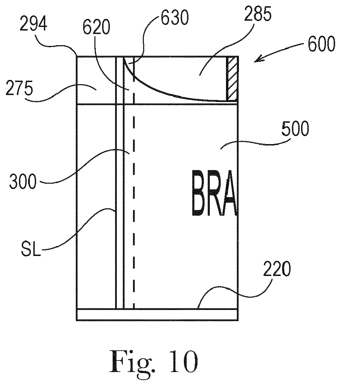

If the preform 600 is provided as an individual preform 600, the preform 600 has an open end 230 opposing the closed end 220. The preform wall 610 extends longitudinally between the closed end 220 and the open end 230 about a longitudinal axis L. The preform 600 has a longitudinal overlapping seam 300 extending along the preform wall 610 from the end seam 295 to the open end 230. A preform 600 that has a label 500 extending about the entire periphery at some location along the preform 600 is shown in Fig. 10. As shown in Fig. 10, the overlapping seam 300 can comprise an outer portion 620 that is part of the external surface 275 of the preform 600 and an underlying inner portion 630. The outer portion 620 can comprise the label 500 and the inner portion 630 can be devoid of the label 500. Arranged as such, the label 500 does not end up being between the outer portion 620 and inner portion 630 of the overlapping seam 300. That can simplify bonding the outer portion 620 to the inner portion 630 when forming the intermediate tube 130 and ultimately provide for a structurally robust finished container 200 that does not fail along the overlapping seam 300 during intended use.

If the label 500 is desired to be part of the closed end 220 of the finished container, the label 500 can extend onto the closed end 220 of the preform 600. The label 500 can extend from the closed end 220 of the preform 600 towards the open end 230 of the preform 600. Since the label 500 is on the external surface 275 of the intermediate tube 130 and the closed end 220 of the preform 600 is formed by pinching the intermediate tube 130, the label will not interfere with the end seam 295.

The overlapping seam 300 of the preform 600 can be considered to have an overlapping seam length SL measured from the end seam 295 along the preform 600 to the neck 194 of the preform 600. The label 500 can cover from about 80% to about 100% of the overlapping seam length SL.

Blowing air or gas, optionally heated or cooled, is blown into the preform 600 below the mandrel 192, or calibration mandrel 190 if provided, and blows out the preform 600 into conformance with the halves of the blow mold 170. Prior to, during, or after blow molding the container 200, the blow mold 170, blowing cane 90, and mandrel 192, or calibration mandrel 190 if provided, can move in the machine direction MD to pull the preform 600, intermediate tube 130, loose conduit 40, and web 30 along in the machine direction MD to advance the process in an indexed manner.

After the container 200 is blow molded and advanced, the blow mold 170 can be opened. Then the blow mold 170 and the mandrel 192, or calibration mandrel 190 if provided, can be moved upstream relative to the machine direction MD. Once the blow mold 170 and mandrel 192, or calibration mandrel 190 if provided, are in the proper position, the blow mold 170 can be closed upon the next portion of the intermediate tube 130 and the steps repeated to form another container 200.

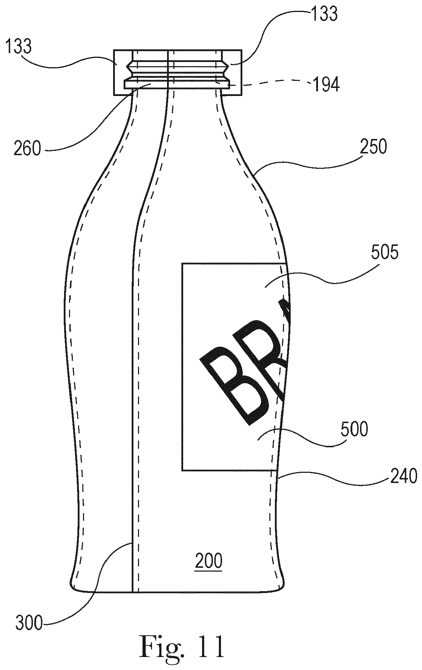

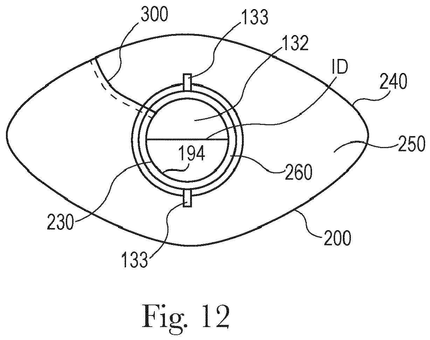

The finished container 200 can be cut from the material upstream of the finished container 200. The cut can be made at or slightly above the neck 194 to leave the neck 194 and other portions of the container 200 intact. If a calibrated neck 194 is provided by employing a calibration mandrel 190, any resulting flashings 133 can be removed from the container 200 via a cutting or breaking operation or removed by hand. A side view of a container 200 in which the flashings 133 are still attached to the container 200 in the neck portion 260 proximal the open end 230 is shown in Fig. 11. The flashings 133 can be thin fin protrusions extending away from the neck portion 260. Stated otherwise, the neck portion 260 can comprise two longitudinally extending flashings 133 projecting away from the longitudinal axis L on opposite sides of the neck portion 260. The neck portion 260 is proximal the open end 230. A top view of a container 200 in which the flashings 133 are still attached to the container 200 in the neck portion 260 proximal the open end 230 is shown in Fig. 12. The inside diameter ID is illustrated in Fig. 12. The calibrated neck 194 can have a calibrated neck open area 132, the open area measured orthogonal to the longitudinal axis L of the container 200. The longitudinal axis L of the container 200 pass through the center of the open end 230. Since in making the container 200 with a calibrated neck 194 the intermediate tube 130 is forced into the calibration mandrel 190 to form the calibrated neck 194, the calibrated neck open area 132 is less than the intermediate tube open area 131.

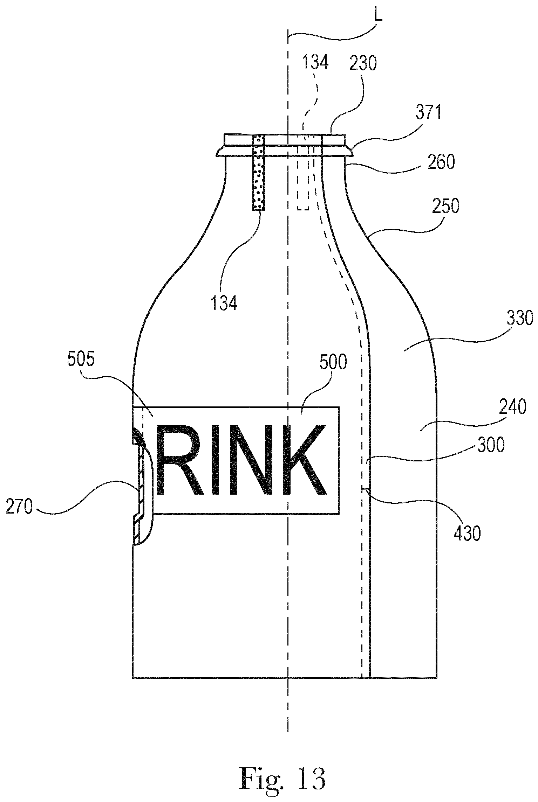

At the locations where the flashings 133 are removed from the container 200, two partially longitudinally extending flashing lines 134 can remain as evidence of the prior existence of the flashings 133, as shown in Fig. 13. As the preform 600 is blown to form the finished container 200, the label 500 on the preform 600 is stretched and becomes a stretched label 505. The adhesive 530 and label 500 on the preform 600 deform in concert with the portion of the preform 600 to which the adhesive 530 and label 500 are affixed. Thus, the stretched label 505 is affixed to the external surface 275 of the container 200 by the adhesive 530, the adhesive 530 also being stretched. Since the stretched label 505 is the same material as the label 500, only transformed by stretching, the stretched label 505 also comprises the label substrate 510 and ink 520.

A conceptually similar approach for forming a container 200 from a flat web 30 or a flat sheet that can be found in US20190070766 A1, which is hereby incorporated by reference in its entirety. A multilayer flat web 30 or flat sheet having an underlying layer comprising a colorant visible through an overlying layer can be employed and a thermal bond can be used to form the overlapping seam 300.

The stretched label 505 can be a least partially embedded in the container 200, by way of nonlimiting example as shown in Fig. 13. The stretched label 505 can become embedded in the container wall 270 as the container wall 270 is pressed up against the mold surface interior of the mold 170 and the portion of the container wall 270 immediately around the stretched label 505 is also pressed up against the mold surface interior of the mold 170. Blow molding may take place at a temperature at which the constituent material forming the container wall 270 can flow. As the portion of the container wall 270 that has the stretched label 505 adhered thereto contacts the mold surface of the interior of the mold 170, the portion of the container wall 270 immediately around the stretched label can deform to conform to the interior of the mold 170. This is the same phenomena that can occur when in-mold labeling is employed to label extrusion blow molded containers or injection blow molded containers. This can result in a smooth or substantially smooth boundary between the stretched label 505 and the container wall 270 adjacent the stretched label, which can help reduce the potential for scuffing of the stretched label 505 and provide for a high quality finished look.

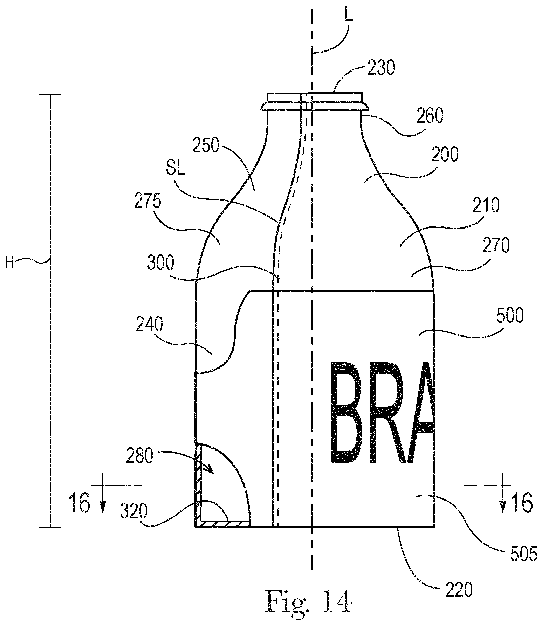

The container wall 270 can be considered to have an interior surface 320 defining the interior volume 280 of the container and an external surface 275 opposing the interior surface (Fig. 14). Each of the main body portion 240, shoulder portion 250, and neck portion 260 can be considered to have an interior surface 320 and an external surface 275. The interior surface 320 can be oriented towards the longitudinal axis L and the external surface 275 can be oriented away from the longitudinal axis L.

With respect to the overlapping seam 300, the overlapping seam 300 can comprise an outer portion 302 that is part of the external surface 275 of the container 200 and an underlying inner portion 301, both the outer portion 302 and the inner portion 301 oriented away from the interior volume 280. The outer portion 302 can comprise the stretched label 505 and the inner portion 302 can be devoid of the stretched label 505. Such an arrangement is practical to avoid having the stretched label 505 interfere with formation and integrity of the overlapping seam 300.

The stretched label 505 can cover part of the overlapping seam 300. Optionally the stretched label can extend about the entire periphery of the container 200 at positions along the longitudinal axis L, the periphery being taken orthogonal to the longitudinal axis L. Such an arrangement can help to obscure the overlapping seam 300 from view to provide for a finished look to the container 200. The overlapping seam 300 can have an overlapping seam length SL measured from end seam 295 to the open end 230 of the container 200. The stretched label 505 can cover more than about 80% of the overlapping seam length SL. Such an arrangement can help to obscure the overlapping seam 300 from view of the user of the container 200.

The closed end 220 can be sized and dimensioned so that the container 200 is free standing on the closed end 220. The thermoplastic substrate can comprise a composition selected from the group consisting of polyethylene terephthalate, polystyrene, polypropylene, polyethylene, polyvinyl chloride, nylon, ethyl vinyl alcohol, and mixtures thereof. The container 200 can have a height H extending between the closed end 220 and the open end 230 and the container wall 270 can have a thickness away from the overlapping seam 300, wherein at a location about 10% of the height H away from the closed end 220 the overlapping seam 300 along the container wall 270 has an overlap magnitude of more than about 1.5 times the thickness of the container wall 270 as measured at a distance from the overlapping seam 300 equal to the overlap magnitude. The container 200 can have a height H extending between the open end 230 and the closed end 220 and the container wall 270 has a thickness away from the overlapping seam 300, wherein the overlapping seam 300 at a location about 10% of the height H away from the closed end 220 is thicker than any other portion of the container wall 270 at a location about 10% of the height H away from the closed end 220. The open end 230 can be threaded. The open end 230 can be threaded on an outer surface of the open end 230. The open end 230 can be threaded on an inner surface of the open end 230. The neck portion 260 can comprise two longitudinally extending flashings 133 projecting away from the longitudinal axis L on opposite sides of the neck portion 260.

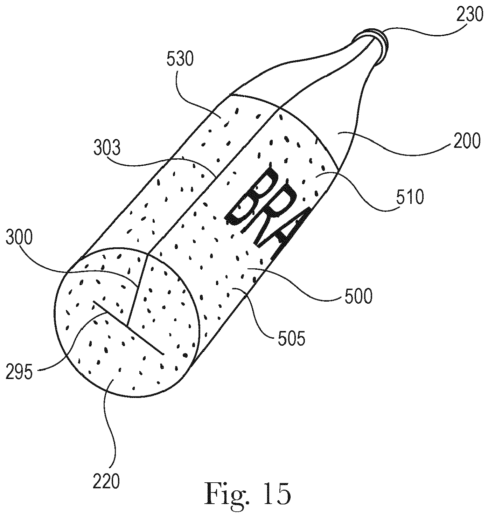

A perspective view of a container 200 showing the closed end 220 is shown in Fig. 15. As shown in Fig. 15, the container 200 can comprise an end seam 295 extending at least partially across the closed end 220 of the container. The end seam 295 can arise when the blow mold 170 is closed upon the intermediate tube 130. At that stage of the process the end seam 295 extends across the intermediate tube 130 to form the preform 600. Then the preform 600 is blown up to form the container 200. A portion of the closed end 220 of the container 200 can be formed of material that was formerly part of the preform wall 610 of the preform 600. An adhesive 530 can optionally be present between the label and the container wall 270.

The container 200 can further comprise a longitudinal overlapping seam 300 extending from the end seam 295. The longitudinal overlapping seam 300 can extend from any portion of the overlapping seam 200, for instance at one of the ends of the end seam 295 or at any location between ends of the end seam 295. A portion of the longitudinal overlapping seam 300 can extend longitudinally along the container wall 270 between the closed end 220 to the neck portion 260 of the container. This might occur if in the neck portion 260 the bonded overlapping portion 120 of the intermediate tube 130 ends up being part of flashing 133. A portion of the longitudinal overlapping seam 300 can extend longitudinally along the container wall 270 between the closed end 220 and the open end 230 of the container. This can occur if a calibrated neck 194 is not formed or in the case in which a calibrated neck 194 is formed and the bonded overlapping portion 120 of the intermediate tube 130 does not end up being part of the flashing 133.

The overlapping seam 300 can arise in the finished container 200 as a result of the conformer 100 closing upon loose conduit 40 in the process of forming the intermediate tube 130. The overlapping seam 300 can comprise a thermal bond 303. The end seam 295 extending at least partially across the closed end 220 of the container can be a smoothed out pinch seam 135. That is the end seam 295 may be substantially smooth after a pinch seam 135 is formed in the intermediate tube 130 and the preform 600 is then deformed by blow molding to form the closed end 220 of the container.

The stretched label 505 can extend onto the closed end 220, as shown in in Fig. 15. That can be provided for by applying the label 500 all the way or most of the way to the closed end 220 of the preform 600. Including the stretched label 505 on the closed end 220 of the container 200 can simplify placement of the label 505 on the preform 600 since the longitudinal position of the label 500 on the preform may not need not be precisely controlled. Further, arranged as such, the bottom of the container 200 can be labeled or the label 505 can make the contents of the container 200 not visible or only partially visible from outside the container 200 and can help to prevent light from entering the container 200 that might spoil the contents therein.

A common one-piece multilayer thermoplastic substrate 210 can form both the closed end 220 and the container wall 270. That is, the closed end 220 and the container wall 270 are comprised of a common one-piece multilayer thermoplastic substrate 210. Stated otherwise, the closed end 220 and the container wall 270 are comprised of a common one-piece multilayer thermoplastic substrate 210. The closed end 220 and the container wall 270 being a unitary one-piece thermoplastic substrate 210 arises as the web 30 is transformed from a flat web to a three-dimensional shape. Stated otherwise, the closed end 220 and the container wall 270 can consist of or comprise a one-piece thermoplastic substrate 210. That is, together, the closed end 220 and the container wall 270 can be formed from a single portion of web 30 that is shaped into a structure that is subsequently blow molded into a container 200. Stated otherwise, the container 200 can be described as being free from seams other than a seam extending at least partially across the closed end 220 and an overlapping seam 300 extending from the end seam 295, a portion of the overlapping seam 300 extending longitudinally along the container wall 270 between the closed end 220 and the open end 230. This construction of the container 200, in which the entire neck portion 260, shoulder portion 250, container wall 270, and closed end 220 are formed of a single integral substrate is practical in that the manufacturer is not required to assemble different parts of the container. This is unlike the construction of containers such as toothpaste tubes that are presently in the market in which the shoulder portion 250 and neck portion 260 are typically formed from an injection molded plastic insert that is bonded to the container wall 270 that is formed from a flexible substrate.

It is also thought that by having the shoulder portion 250 and container wall 270 formed of a single integral substrate that there is less potential for a leak to occur at such location since there is no potential for a leaky bond between the shoulder portion 250 and the container wall 270. Stated otherwise, the juncture between the shoulder portion 250 and the container wall 270 can be free from a seam. Further, the juncture between the neck portion 260 and the shoulder portion 250 can be free from a seam forming the juncture. Further, the juncture between the shoulder portion 250 and the container wall 270 can be free from a seam forming the juncture.

Since the closed end 220 and container wall 270 consist of or are comprised of a single portion of web 30, the end seam 295 across at least a portion of the closed end 220 of the container extends to or connects to overlapping seam 300 extending longitudinally along the container wall 270. As such, the overlapping seam 300 can be continuous across the boundary between the closed end 220 and container wall 270. The overlapping seam 300 can extend along the height H of the container 200. The height H of the container extends between the closed end 220 and the open end 230.

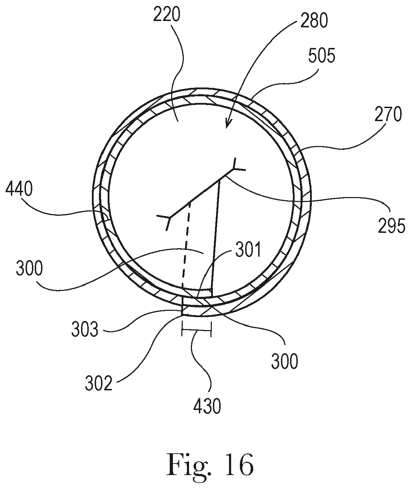

A cross section of a container 200 is shown in Fig. 16, the view being taken to show the closed end 220. As shown in Fig. 16, the overlapping seam 300 can extend across part of the closed end 220. The overlapping seam 300 across part of the closed end 220 can be connected to the end seam 295. As shown in Figs. 15 and 16, the overlapping seam 300 can extend from the end seam 295 across part of the closed end 220 of the container to the container wall 270 and longitudinally along the container wall 270 between the closed end 220 and open end 230. Stated otherwise, a portion of the longitudinal overlapping seam 300 can extend longitudinally along the container wall 270 between the closed end 220 and the open end 230 of the container and between the container wall 270 and the end seam 295. As such, the container 200 can comprise an overlapping seam 300 that is connected to the end seam 295 and extends partially across the closed end 220 of the container and longitudinally along at least part of the container wall 270 between the closed end 220 and the open end 230.

As shown in Fig. 16, at about 10% of the height away from the closed end 220 of the container 200, height being the straight line height between the closed end 220 and open end 230 parallel to the longitudinal axis L, the overlapping seam 300 along the container wall 270 has an overlap magnitude 430 of more than about 1.5 times the thickness 440 of the container wall 270 as measured at a distance from the overlapping seam 300 equal to the magnitude of overlap 430. As a result of blow molding to form the container 200, the container 200 can have a variety of thicknesses at different locations on the container. For example, the thickness of the container wall 270 in the main body portion 240 may be different from the thickness of the closed end 220, shoulder portion 250, and neck portion 260. The overlap magnitude 430 may vary at different locations along the overlapping seam 300 along the height H of the container 200. To provide for a common location at which to measure the overlap magnitude 430 regardless of height H of the container 200, the comparison of the overlap magnitude 430 can be taken at a location about 10% of the height H away from the closed end 220 of the container 200. Without being bound by theory, it is thought that a representative measure of thickness of the container wall 270 can be taken at a distance from the overlapping seam equal to the overlap magnitude 430.

Such location is relatively near the seam but yet not so far from the overlapping seam 300 so as to be at a completely different part of the container 200, such as at a handle, if present, or some other decorative or functional part of the container 200. Further, thickness of the container wall 270 at the overlapping seam 300 along the height H of the container may vary as a function of location. Greater overlap might be measured at the maximum axial dimension of the container 200 as compared to the shoulder portion 250 or neck portion 260 since that portion of the container is stretched more during formation of the container 200 than the shoulder portion 250 or neck portion 260. The overlapping seam 300 at a location about 10% of the height away from the closed end 220 can be thicker than any other portion of the container wall 270 at a location about 10% of the height away from the closed end 220 of the container 200.

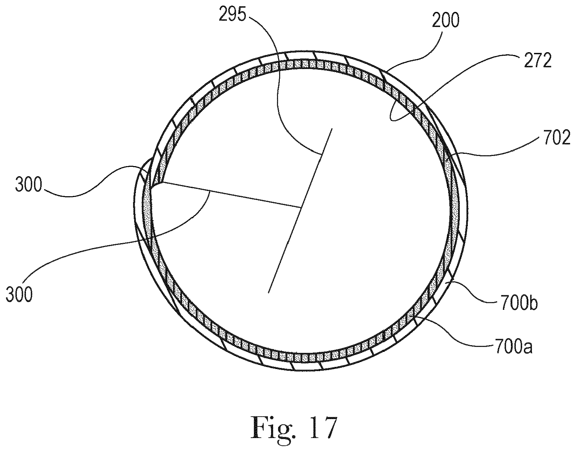

The container wall 270 can comprise two layers, underlying layer 700a and outer layer 700b, as shown in Fig. 17. The underlying layer 700a is adjacent the outer layer 700b. The underlying layer 700a is between the outer layer 700b and the longitudinal axis L. The underlying layer 700a is between the outer layer 700b and the inners surface 272. The outer layer 700b layer can be translucent or clear so that the underlying layer 700a is visible to an observer of the external surface 275. A multilayer container wall 270 can be formed from a laminate web 30. The laminate web 30 can comprise the underlying layer 700a and the outer layer 700b. A laminate web 30 can be conveniently manufactured and it can be practical to provide a colorant 702 to one or more layers of a laminate web 30. In practice, it may be technically simpler and less expensive to provide a colorant in 702 in the underlying layer 700a in a flat web 30 and forming the container 200 from such flat web 30 as compared to providing colorant in a multilayer parison or injection molded preform. Thus, a multilayer container 200 that includes a colorant in the underlying layer can be cost effectively manufactured as compared to multilayer extrusion blow molded containers or multilayer injection blow molded containers.

The outer layer 700b can have melt flow index greater than or equal to about 2 as measured according to ASTM D 1238-13. This can provide for an outer layer 700b that conforms to the mold surface interior of the mold 170.

The outer layer 700b can be clear. The outer layer 700b can be substantially clear. Such an outer layer 700b can render the underlying layer 700a visible through the outer layer 700b. To enhance the clarity of the outer layer 700b, the outer layer 700b can comprise a clarifier. The outer layer 700b can be clarified polypropylene.

The underlying layer 700a can comprise a colorant 702. The colorant 702 can be visible through the outer layer 700b. The colorant 702 can be a pigment or dye or other material suitable for coloring the underlying layer 700a.

The colorant can be an effect pigment. Effect pigments include metal effect pigments and special effect pigments. Metal effect pigments consist of metallic particles. They create a metallike luster by reflection of light at the surface of the metal platelets when having parallel alignment in their application system. Special effect pigments include all other platelet-like effect pigments which cannot be classified as metal effect pigments. These are typically based on a substrate which has platelet shaped crystals (or particles) such as mica, (natural or synthetic) borosilicate glass, alumina flakes, silica flakes. These platelet shaped particles can be coated with metal oxides.

Effect pigments can include pearlescent pigments (also referred to as pearl luster pigments). Also suitable are interference pigments or nacreous pigments that are based on the use of a laminar substrate such as mica or glass flake which has been coated with one or more dielectric layers including metal oxides, silicon dioxide, aluminum oxide and other oxides. These pigments can exhibit pearl-like luster as a result of reflection and refraction of light, and depending on the thickness of the metal oxide layer, they can also exhibit interference color effects. Non-limiting examples of pearlescent pigments can include titanium dioxide-coated mica, iron oxide-coated mica, and combinations thereof.

Effect pigments, including pearlescent pigments are marketed as such by suppliers including MERCK and BASF. The effect pigment can be FIREMIST COLORMOTION available from BASF. The effect pigment can be a seven layer structure starting from a borosilicate platelet substrate followed by alternating TiO₂/SiO₂/TiO₂ on either side of the substrate. Alternatively, substrates such as silicon dioxide which are synthetically produced with uniform and controllable thickness can create color travel/goniochromatic effects with only a 3-layer A/B/A structure where A= TiO₂ and B= SiO₂. A commercial example of this is the COLORSTREAM available from Merck KGaA.

The pigment can have a particle size from about 150 nm to about 5000 nm. The pigment can have a particle size, in the longest dimension, from about 1 µm to about 200 µm, from about 2 µm to about 150 µm, from about 3 µm to about 100 µm, from about 4 µm to about 75 µm, and/or from about 5 µm to about 5 µm. The pigment can have a thickness less than 5 µm, less than 3 µm, less than 1 µm,less than 800 nm, less than 700 nm, and/or less than 600 nm. The effect pigments can have a thickness from about 25 nm to about 5 µm, from about 100 nm to about 3 µm, from about 150 nm to about 1 µm, from about 200 nm to about 700 nm, from about 250 nm to about 600 nm, and/or from about 300 nm to about 560 nm.

The colorant can be a dye, a dye being soluble within the constituent material within which the colorant resides.

The underlying layer can comprise from about 0.1 % by weight to about 6 % by weight colorant. The underlying layer can comprise from about 1% by weight to about 6 % by weight colorant. Such a weight fractions can be sufficient to affect the color of the underlying 700a to a degree such that the color of the underlying layer 700a is visible through the outer layer 700b.

The container wall 270 has an inner surface 272, which is the interior surface of the container wall 270. The inner surface 272 can comprise an inner surface constituent monomer. The inner surface constituent monomer is the monomer forming or at least partially, or predominantly forming, the layer of material that forms the interior of the container wall 270. The outer layer 700b can also comprise an outer layer constituent monomer. The outer layer constituent monomer is the monomer forming or at least partially forming or predominantly forming the outer layer 700b. To facilitate forming a strong overlapping seam 300, the inner surface constituent monomer can be the same as the outer layer constituent monomer. Materials having the same constituent monomer can be thermal bonded to one another. Optionally, the outer layer 700b and the inner surface 272 can have the same constituent polymer.

The outer layer 700b and the inner surface 702, can comprise a polymer selected from the group consisting of polypropylene, polyethylene, nylon, polyethylene terephthalate, polyethylene terephthalate glycol, and combinations thereof. Such polymers can be practically thermal bonded to one another. The outer layer 700b and the inner surface 272 can be the same polymer having the same weight average molecular weight.

The underlying layer 700a can be thicker than the outer layer 700b. The outer layer 700b can be a clear, substantially clear, or translucent layer through which the underlying layer 700a is visible. A thin outer layer 700b that is clear can provide a glossy or shiny aesthetic to the container 200.

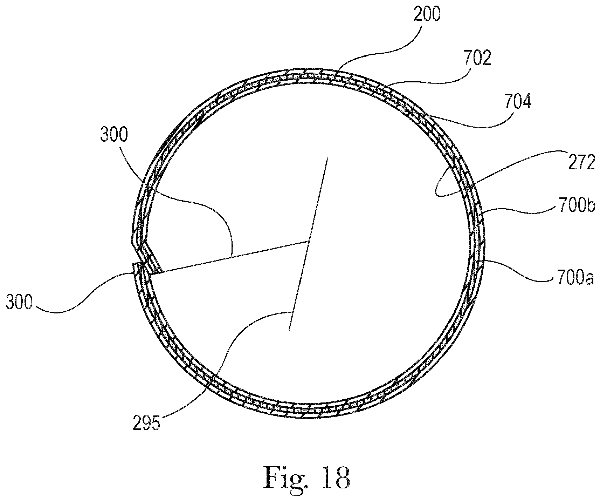

Optionally, the multilayer web 30, and thereby container wall 270, can comprise three layers, the outer layer 700b, an interior layer 704, and the underlying layer 700a, the underlying layer 700a being between the outer layer 700b and the underlying layer 700a (Fig. 18). The interior layer 704 can provide the inner surface 272 that is oriented towards the interior of the container. That is, the inner surface 272 can be comprised of the interior layer 704. The interior layer 704 can comprise a pigment. The interior layer 704 can be opaque. An opaque interior layer 704 can provide for more visual impact of the of the colorant 702 when viewed from the exterior of the container and protect the contents of the container 200 from degradation due to light. One practical three-layer container can comprise a clear or substantially clear outer layer 700b, an underlying layer 700b comprises a colorant visible through the outer layer 700b, and an interior layer 704 that comprises a colorant. Such an arrangement can provide for a container wall 270 having a deep color or visual effect to appear to be a thicker higher quality material as compared to single layer container 200.

### Combinations:

An example is below:
A. A container (200) comprising:
   an open end (230);
   a closed end (220) opposing said open end;
   a container wall (270) extending longitudinally between said closed end and said open end about a longitudinal axis (L);
   an end seam (295) extending at least partially across said closed end; and
   a longitudinal overlapping seam (300) extending from said end seam, a portion of said overlapping seam extending longitudinally along said container wall from said closed end to said open end;
   wherein said open end is narrower than at least a portion of said container away from said open end of said container;
   wherein a common one-piece multilayer thermoplastic substrate (210) forms both said closed end and said container wall;
   wherein said container wall comprises an outer layer (700b) and an adjacent underlying layer (700a);
   wherein said underlying layer comprises colorant visible through said outer layer.
B. The container according to Paragraph A, wherein said colorant is a pigment or dye.
C. The container according to Paragraph A, wherein said colorant is an effect pigment.
D. The container according to Paragraph A, wherein said colorant is an effect pigment selected from the group consisting of metal flakes, glass flakes, and combinations thereof.
E. The container according to Paragraph A, wherein said colorant is an effect pigment selected from the group consisting of mica, borosilicate glass, alumina flakes, silica flakes, and mixtures thereof.
F. The container according to any of Paragraphs A to E, wherein said container wall has an inner surface and said outer layer is thermal bondable to said inner surface.
G. The container according to any of Paragraphs A to F, wherein said container wall has an inner surface comprising an inner surface constituent monomer and said outer layer comprises an outer layer constituent monomer, wherein said inner surface constituent monomer is the same as said outer layer constituent monomer.
H. The container according to any of Paragraphs A to G, wherein said underlying layer comprises from about 0.1 % by weight to about 6 % by weight said colorant.
I. The container according to any of Paragraphs A to H, wherein said underlying layer is thicker than said outer layer.
J. The container according to any of Paragraphs A to I, wherein said outer layer and said underlying layer comprise a polymer selected from the group consisting of polypropylene, polyethylene, nylon, polyethylene terephthalate, polyethylene terephthalate glycol, and combinations thereof, and said outer layer and said underlying layer are the same polymer.
K. The container according to any of Paragraphs A to J, wherein said common one-piece multilayer thermoplastic substrate is a distortion printed one-piece thermoplastic substrate.
L. The container according to any of Paragraphs A to K, wherein said longitudinal overlapping seam comprises a thermal bond.
M. The container according to any of Paragraphs A to L, wherein said container wall further comprises an interior layer 704 and said underlying layer is between said outer layer and said interior layer, wherein said inner surface is comprised of said interior layer.
N. The container according to any of Paragraphs A to M, wherein said outer layer has a melt flow index greater than or equal to about 2.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A container (200) comprising:
an open end (230);
a closed end (220) opposing said open end;
a container wall (270) extending longitudinally between said closed end and said open end about a longitudinal axis (L);
an end seam (295) extending at least partially across said closed end; and
a longitudinal overlapping seam (300) extending from said end seam, a portion of said overlapping seam extending longitudinally along said container wall from said closed end to said open end;
wherein said open end is narrower than at least a portion of said container away from said open end of said container;
wherein a common one-piece multilayer thermoplastic substrate (210) forms both said closed end and said container wall;
wherein said container wall comprises an outer layer (700b) and an adjacent underlying layer (700a);
wherein said underlying layer comprises colorant visible through said outer layer.

2. The container according to Claim 1, wherein said colorant is a pigment or dye.

3. The container according to Claim 1, wherein said colorant is an effect pigment.

4. The container according to Claim 1, wherein said colorant is an effect pigment selected from the group consisting of metal flakes, glass flakes, and combinations thereof.

5. The container according to Claim 1, wherein said colorant is an effect pigment selected from the group consisting of mica, borosilicate glass, alumina flakes, silica flakes, and mixtures thereof.

6. The container according to any of Claims 1 to 5, wherein said container wall has an inner surface and said outer layer is thermal bondable to said inner surface.

7. The container according to any of Claims 1 to 6, wherein said container wall has an inner surface comprising an inner surface constituent monomer and said outer layer comprises an outer layer constituent monomer, wherein said inner surface constituent monomer is the same as said outer layer constituent monomer.

8. The container according to any of Claims 1 to 7, wherein said underlying layer comprises from about 0.1 % by weight to about 6 % by weight said colorant.

9. The container according to any of Claims 1 to 8, wherein said underlying layer is thicker than said outer layer.

10. The container according to any of Claims 1 to 9, wherein said outer layer and said underlying layer comprise a polymer selected from the group consisting of polypropylene, polyethylene, nylon, polyethylene terephthalate, polyethylene terephthalate glycol, and combinations thereof, and said outer layer and said underlying layer are the same polymer.

11. The container according to any of Claims 1 to 10, wherein said common one-piece multilayer thermoplastic substrate is a distortion printed one-piece thermoplastic substrate.

12. The container according to any of Claims 1 to 11, wherein said longitudinal overlapping seam comprises a thermal bond.

13. The container according to any of Claims 1 to 12, wherein said container wall further comprises an interior layer 704 and said underlying layer is between said outer layer and said interior layer, wherein said inner surface is comprised of said interior layer.

14. The container according to any of Claims 1 to 13, wherein said outer layer has a melt flow index greater than or equal to about 2.
